# EUROPÄISCHE PATENTSCHRIFT

(11) **EP 0 474 119 B1**
(45) Veröffentlichungstag und Bekanntmachung des Hinweises auf die Patenterteilung: **18.10.1995**
(21) Anmeldenummer: 91114545.6
(22) Anmeldetag: 29.08.1991
(51) Int. Cl.: F16C 29/06, F16C 33/34

(54) **Rollenlageranordnung**
Roller bearing
Dispositif de roulement à rouleaux

(30) Priorität: 03.09.1990 DE 4027890
(43) Veröffentlichungstag der Anmeldung: 11.03.1992
(73) Patentinhaber: Deutsche Star GmbH, 97424 Schweinfurt (DE)
(72) Erfinder: Blaurock, Werner, W-8721 Niederwerrn (DE)
(74) Vertreter: Weickmann, Heinrich, Dipl.-Ing.

(56) Entgegenhaltungen:
- DE-A- 3 323 536
- DE-A- 3 620 571
- DE-C- 301 884
- DE-C- 3 123 323
- FR-A- 1 350 681
- GB-A- 304 992
- GB-A- 564 273
- US-A- 1 328 179
- US-A- 1 443 915
- US-A- 1 469 991
- US-A- 3 230 018

## Beschreibung

Die Erfindung betrifft eine Rollenlageranordnung mit relativ zueinander durch mindestens eine Gruppe von Rollen geführten Lagerteilen,
wobei eine Rolle eine Rollenachse und eine lastaufnehmende Umfangsfläche um die Rollenachse aufweist,
wobei weiter die lastaufnehmenden Umfangsflächen der Rollen an je einer zu den Rollenachsen im wesentlichen orthogonal verlaufenden, lastaufnehmenden Rollenlaufbahn der beiden Lagerteile anliegen und
wobei Distanzmittel vorgesehen sind, um die gegenseitige Berührung der lastaufnehmenden Umfangsflächen einander benachbarter Rollen zu verhindern, und wobei die lastaufnehmende Unfangsfläche einer Rolle in Achsrichtung der Rolle zwischen zwei distanzhaltenden Umfangsflächen der Rolle angeordnet ist, welche in radialer Richtung über die las/aufnehmende Umfangsfläche vorspringen und axial außerhalb der lastaufnehmenden Rollenlaufbahnen der Lagerteile liegen.

Solche Rollenlageranordnungen sind bekannt und werden sowohl bei Drehlagern als auch bei Linearlagern verwendet.

Eine derartige Rollenlageranordnung ist Z. B. aus der GB-A 564 273 bekannt. Bei dieser bekannten Rollenlageranordnung weisen die Rollen an ihren axialen Enden sich nach radial außen erstreckende Endflansche auf, wobei wenigstens einer der an den axialen Enden vorgesehenen Endflansche mit der entsprechenden Lagerrolle fest verbunden ist. Bei einer Betätigung der in dieser Druckschrift gezeigten Rollenlageranordnung kommen die Außenumfangsflächen der Endflansche verschiedener Lagerrollen miteinander in Berührung, und verursachen aufgrund der bei gleichem Drehsinn der Lagerrollen unterschiedlichen Bewegungsrichtungen der Umfangsflächen der Endflansche im Bereich ihres Berührungspunkts eine Reibung zwischen den Rollen, welche zu einer erhöhten Reibung der gesamten Rollenlageranordnung führt.

Aus der DE-C-3 123 323 ist eine Rollenlageranordnung zwischen zwei relativ zueinander verdrehbaren Lagerteilen bekannt, bei der man zwischen an den Rollenenden aufgenieteten Endscheiben von gegenüber den Umfangsflächen der Rollen kleinerem Durchmesser zusätzliche Distanzelemente einsetzt.

Bei einer anderen aus der DE-A-3 323 536 bekannten Ausführungsform eines Linearlagers sind an einer Rolle jeweils zwei lasttragende Umfangsflächen axial nebeneinander angeordnet, die durch einen im Durchmesser verringerten Zapfen verbunden sind. Dabei sind die lastübertragenden Umfangsflächen aufeinanderfolgender Rollen durch zusätzliche kettengliedartige Verbindungsglieder verbunden, welche die lastaufnehmenden Umfangsflächen benachbarter Rollen auf Distanz halten.

In beiden Fällen sind neben den Rollen gesonderte Distanzelemente notwendig, welche die Herstellung der Rollen und die Montage der Rollenlageranordnung erschweren.

Der Erfindung liegt die Aufgabe zugrunde, eine Rollenlageranordnung der eingangs bezeichneten Art so zu gestalten, daß sie niedrige Reibungsverluste aufweist und einfach hergestellt werden kann.

Zur Lösung der Aufgabe wird vorgeschlagen, daß der Gleitreibwert zwischen distanzhaltenden Umfangsflächen benachbarter Rollen geringer ist als der theoretische Gleitreibwert zwischen zwei lastaufnehmenden Umfangsflächen.

Es wird somit ein besonders reibungs- und geräuscharmer Lauf der Rollen bei verringertem Lagerverschleiß erreicht.

Bei der erfindungsgemäßen Rollenlageranordnung können die Umfangsflächen auf sehr eng bemessenem Abstand zueinander gehalten werden, so daß die Tragfähigkeit (Tragzahl) durch die Distanzhaltung zwischen den lastaufnehmenden Umfangsflächen nicht wesentlich verringert wird. Die Montage bleibt äußerst einfach, weil neben den Rollen selbst keine losen Distanzmittel notwendig sind. Zylinderrollen sind bevorzugt symmetrisch in Bezug auf eine achsnormale Mittelebene ausgebildet, so daß keine Falschmontage durch Vertauschen der Rollenenden möglich ist.

Der Platzbedarf der Rollen bei gegebener Tragzahl wird gegenüber rein zylindrischen Rollen nicht wesentlich vergrößert, wenn die axiale Breite einer distanzhaltenden Umfangsfläche wesentlich geringer als die axiale Breite der lastaufnehmenden Umfangsfläche ist, beispielsweise weniger als 40 %, vorzugsweise weniger als 20 % der axialen Breite der lastaufnehmenden Umfangsfläche ist, bzw. wenn der radiale Vorsprung der distanzhaltenden Umfangsflächen weniger als 30 %, bevorzugt weniger als 10 % des Radius der lastaufnehmenden Umfangsfläche beträgt.

Eine weitere Verbesserung ergibt sich, wenn wenigstens eine im wesentlichen achsnormale Stirnfläche einer Rolle wenigstens teilweise mit einer gleitgünstigen Schicht beschichtet ist und mit dieser an einer ihr gegenüberliegenden Stützfläche gleitend anliegt.

Um die Herstellung der Rollen zu erleichtern, ist bevorzugt die gleitgünstige Schicht einer Rollenstirnfläche zusammenhängend mit dem Material einer distanzhaltenden Umfangsfläche ausgebildet.

Die distanzhaltende Umfangsfläche kann durch eine an dem Material der Rolle anhaftende Schicht gebildet sein, die beispielsweise durch Tauchen, Aufspritzen, chemisches Behandeln oder Teflonbeschichtung aufgebracht wurde, oder aber durch Aufschnappen einer topfförmigen Kappe auf ein Halteprofil der Rolle, wobei der Kappenmantel die distanzhaltende Umfangsfläche bildet.

Nach einer weiteren Ausführungsform ist die distanzhaltende Umfangsfläche von der Umfangsfläche einer an einer Rollenstirnfläche befestigten Scheibe gebildet.

Um besonders günstige Gleiteigenschaften der Rollenstirnflächen an zugeordneten Stützflächen der Lagerteile zu erreichen, kann in mindestens einer Rollenstirnfläche wenigstens eine Ausnehmung zur Aufnahme von Schmiermittel vorgesehen; alternativ kann an mindestens einer Rollenstirnfläche ein zentraler Vorsprung oder ein ringförmiger Vorsprung zur gleitenden Anlage an einer Stützfläche vorgesehen sein. Eine weitere Verminderung der Reibung zwischen benachbarten Rollen wird erreicht, wenn die distanzhaltenden Umfangsflächen in einer achsenthaltenden Schnittebene betrachtet ballig ausgebildet sind, wodurch sich die distanzhaltenden Umfangsflächen benachbarter Rollen nur noch in je einem Punkt berühren. Hierbei sind der Verschleiß und das Abrollgeräusch des Lagers besonders gering.

Die erfindungsgemäße Rollenlageranordnung ist sowohl in Drehrollenlagern, bei denen die Lagerteile von relativ zueinander drehbaren Ringteilen gebildet sind, als auch in Linearrollenlagern anwendbar, bei denen die Lagerteile von relativ zueinander längs einer Verschiebeachse linear beweglichen Schiebeteilen gebildet sind.

Die Rollenlageranordnung in einem Linearrollenlager ist bevorzugt derart ausgebildet, daß an einem ersten der Schiebeteile mindestens ein geschlossener Rollenumlauf mit einer zur Verschiebeachse parallelen lastübertragenden Rollenreihe und mit einer rücklaufenden Rollenreihe angeordnet ist, wobei die Rollen der lastübertragenden Rollenreihe zwischen je einer lastaufnehmenden Rollenlaufbahn des ersten Schiebeteils und einer lastaufnehmenden Rollenlaufbahn eines zweiten der Schiebeteile angeordnet sind, und wobei die rücklaufende Rollenreihe in einer Rücklaufführung an dem ersten Schiebeteil geführt ist.

Die Rollen der lastübertragenden Rollenreihe werden bevorzugt durch Anlage ihrer Stirnflächen an Stützflächen mindestens eines der Schiebeteile geführt, so daß sie in Richtung ihrer Längsachsen zueinander ausgerichtet sind.

Die Rollen der rücklaufenden Rollenreihe, welche keine Last überträgt, laufen bevorzugt in einem an dem ersten Schiebeteil gebildeten Führungskanal, wobei die Rollen zur Verringerung der Kontaktflächen und damit der Reibung nur mit den distanzhaltenden Umfangsflächen an den Begrenzungsflächen dieses Führungskanals anliegen und die lastaufnehmenden Umfangsflächen der Rollen außer Berührung mit den Begrenzungsflächen sind.

Eine besonders hohe Tragfähigkeit einer erfindungsgemäßen Rollenlageranordnung in einem Linearrollenlager bei gleichzeitig geringer Bauhöhe des Linearrollenlagers wird erreicht, wenn das zweite Schiebeteil von einer Führungsschiene mit einer Fußfläche, einer Kopffläche, zwei Seitenflächen und einer Symmetrieebene zwischen den beiden Stirnflächen gebildet ist, in den beiden Seitenflächen je eine Trapeznut eingearbeitet ist, die zur Symmetrieebene hin konvergierenden Flächen der Trapeznut die lastaufnehmenden Rollenlaufbahnen von insgesamt vier Rollenumläufen bilden und das erste Schiebeteil von einem die Führungsschiene umfassenden U-förmigen Lagerkörper mit einem Stegbereich und zwei Schenkelbereichen gebildet ist, wobei an den Seitenflächen der Führungsschiene gegenüberstehenden Innenflächen der Schenkelbereiche die lastaufnehmenden Rollenlaufbahnen des Lagerkörpers im wesentlichen parallel zu den lastaufnehmenden Rollenlaufbahnen der Führungsschiene angeordnet sind.

Bei einer derartigen Rollenlageranordnung können die Trapeznuten für jede lastaufnehmende Rollenlaufbahn der Führungsschiene mindestens eine Ausklinkung zur Aufnahme der distanzhaltenden Umfangsflächen der Rollen aufweisen; weiter kann an den Innenflächen der Schenkelbereiche des Lagerkörpers für die Rollen jeder lastübertragenden Rollenreihe mindestens eine Ausklinkung für die distanzhaltenden Umfangsflächen der Rollen vorgesehen sein; so wird erreicht, daß die distanzhaltenden Umfangsflächen der Rollen gegenüber den verschiebbaren Lagerteilen freigehalten sind und keine Last aufnehmen müssen.

An ein und demselben Haltesteg kann jeweils eine Stützfläche für die beiden einem Schenkelbereich zugeordneten lastübertragenden Rollenreihen vorgesehen sein.

Ausführungsbeispiele der Erfindung werden im folgenden anhand der beigefügten Figuren beschrieben. Es zeigen:
- Figur 1: eine erfindungsgemäße Rolle;
- Figur 2: eine erfindungsgemäße Rolle vor dem Zusammenbau;
- Figur 3: eine erfindungsgemäße Rolle gemäß Figur 2 nach dem Zusammenbau;
- Figur 4a: einen achsenthaltenden Schnitt durch eine Kunststoffkappe;
- Figur 4b: einen achsenthaltenden Schnitt durch eine andere Ausführungsform der Kunststoffkappe;
- Figur 5a: ein Schema der Anordnung der Rollen zwischen zwei Lagerteilen in Axialrichtung der Rollen gesehen;
- Figur 5b: ein Schema der Anordnung der Rollen zwischen zwei seitlichen Stützflächen;
- Figur 6: einen achsenthaltenden Teilschnitt durch ein Radiallager mit einer Rolle;
- Figur 7: einen Querschnitt durch ein Linearlager mit vier Rollenumläufen.

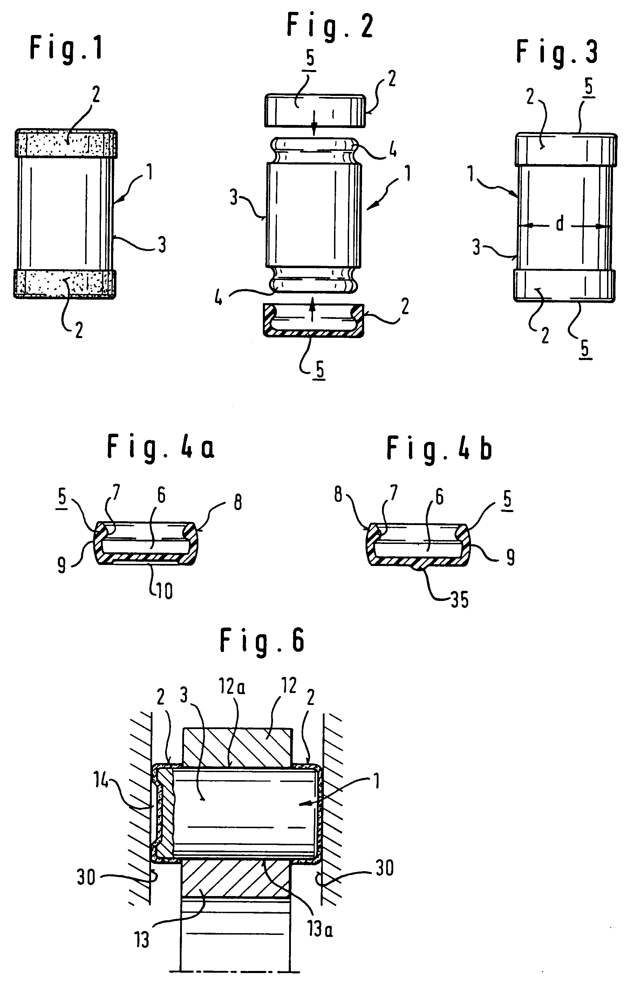

Die Figur 1 zeigt eine zylindrische Rolle 1, deren axiale Endbereiche distanzhaltende Umfangsflächen 2 einen geringfügig größeren Durchmesser aufweisen als deren axialer Mittelbereich, der eine lastaufnehmende Umfangsfläche 3 bildet. Das Aufmaß der distanzhaltenden Umfangsflächen 2 kann durch folgende Maßnahmen erreicht werden: Tauchen, Aufspritzen, chemisches Behandeln, Teflonbeschichtung, Aufschnappen von Kunststoffkappen usw.. Die axiale Länge der beschichteten distanzhaltenden Umfangsflächen 2 ist im Verhältnis zur axialen Länge der lastaufnehmenden Umfangsfläche 3 so kurz wie möglich gehalten, damit fast kein Tragzahlverlust gegenüber herkömmlichen Rollen gleicher Gesamtlänge auftritt.

Figur 2 zeigt eine Ausführungsform der Rolle 1, auf deren axiale Enden Kunststoffkappen 5 aufgeschnappt werden. In Figur 3 erkennt man, daß die Kunststoffkappen 5 gegenüber dem Rollendurchmesser d ein geringes Aufmaß besitzen. Durch dieses Aufmaß ist sichergestellt, daß sich in einer Rollenlageranordnung benachbarte Rollen 1 nur an den distanzhaltenden Umfangsflächen 2 berühren. Durch diese kleine Berührungsfläche und die entsprechende Materialwahl wird das Reibverhalten erheblich verbessert, so daß es insbesondere bei hohen Lagerlaufgeschwindigkeiten zu keinen Schäden an den Rollen kommt und die Lagertemperatur gesenkt wird.

Die Figuren 4a und 4b zeigen jeweils einen achsenthaltenden Schnitt durch eine Kunststoffkappe 5. Die Kunststoffkappe 5 besitzt eine Innenhöhlung 6, von deren Innenumfang ein umlaufender Wulst 7 hervorsteht, so daß die Kunststoffkappe 5 formschlüssig mit einem Halteprofil 4 am axialen Ende einer Rolle 1 (Figur 2 )verrastet werden kann. Die Umfangsfläche 8 der Kappe 5 ist ballig ausgebildet, damit sich zwischen den einzelnen Rollen 1 nur eine Punktberührung an der Stelle 9 ergibt. Um das Reibverhalten an axialen Stützflächen eines Rollenlagers zu verbessern, befindet sich an der Stirnseite der Kunststoffkappe 5 gemäß Figur 4a eine Ausnehmung 10 zur Aufnahme von Schmiermittel. Die Kunststoffkappe 5 nach Figur 4b besitzt anstatt der Ausnehmung 10 einen zentralen Vorsprung 35. Dadurch, daß sich bei dieser Ausführung der Berührungspunkt mit der axialen Stützfläche eines Rollenlagers auf der Drehachse der Rolle 1 befindet, sinkt die Reibung an dieser Stelle auf ein Minimum. Die Kunststoffkappe 5 kann auch die Form einer flachen Scheibe besitzen, die an den Stirnseiten der Rolle 1 befestigt wird.

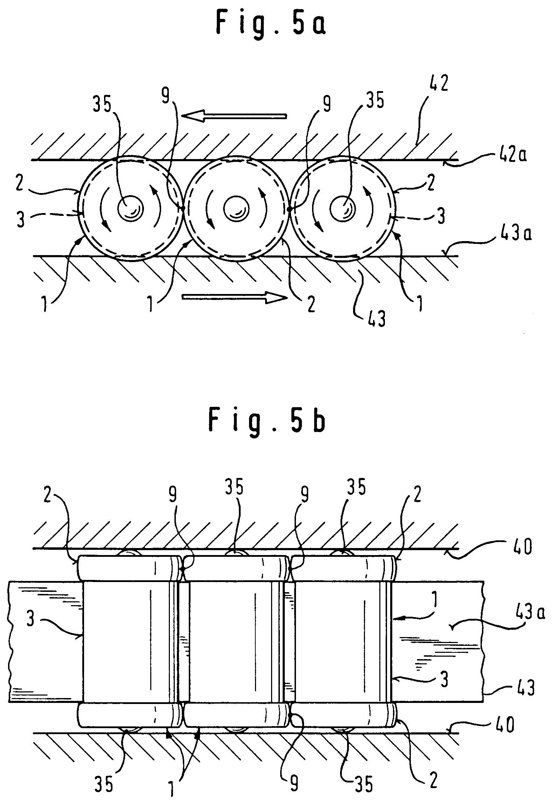

Wie man in Figuren 5a und 5b sieht, laufen die Rollen 1 in einem Rollenlager derart ab, daß sie an ihren Punktberührungsstellen 9 eine gegenläufige Drehrichtung besitzen. Die distanzhaltenden Umfangsflächen 2 springen in radialer Richtung über die lastaufnehmenden Umfangsflächen 3 vor, die auf lastaufnehmenden Rollenlaufbahnen 42a, 43a von Lagerteilen 42,43 aufliegen, und verhindern den Kontakt zwischen lastaufnehmenden Umfangsflächen 3 benachbarter Rollen 1. Die Rollen berühren sich nur an den Punktberührungsstellen 9 der distanzhaltenden Umfangsflächen 2. Aufgrund der kleinen Berührungsfläche - hervorgerufen durch das Aufmaß der distanzhaltenden Umfangsflächen 2 - wird die gegenseitige Reibung und damit der Verschleiß reduziert. Darüber hinaus wird das Ablaufverhalten verbessert und das Ablaufgeräusch durch das Verhindern gegenseitiger Metallberührung gesenkt. Wie in Figur 5b dargestellt, liegen die distanzhaltenden Umfangsflächen 2 axial außerhalb der lastaufnehmenden Rollenlaufbahn 43a. Die Rollen 1 berühren axiale Stützflächen 40 des Rollenlagers nur mittels der zentralen Vorsprünge 35 an den Rollenstirnseiten.

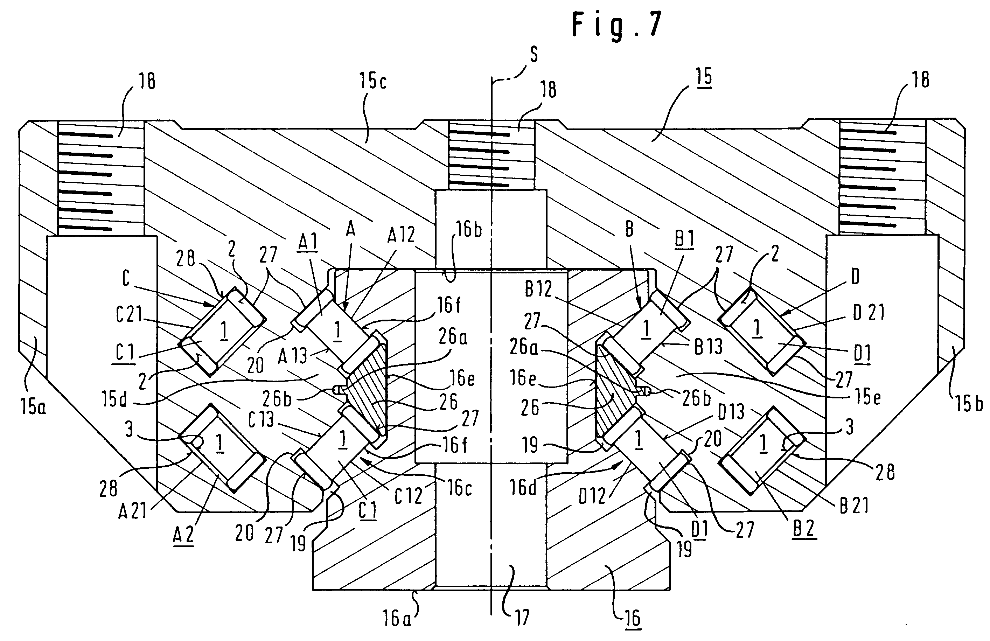

Figur 6 zeigt ein Zylinderrollenlager, mit einem Außenring 12, einem Innenring 13, lastaufnehmenden Rollenlaufbahnen 12a bzw. 13a, axialen Stützflächen 30 und einer Rolle 1. Auf die distanzhaltenden Umfangsflächen 2 der Rolle 1 wurde durch Tauchen oder dergl. eine reibungsmindernde Schicht aufgebracht. Das linke Ende der Rolle 1 zeigt eine Ausführungsform, bei der die Rolle 1 eine Ausnehmung 14 besitzt, die nach der Beschichtung noch vorhanden ist, so daß die stirnseitige Reibung der Rollen an den axialen Stützflächen 30 an denen die Rollen axial geführt werden, verringert wird. Dies geschieht dadurch, daß sich in der Ausnehmung 14 Schmiermittel befindet, das während des Ablaufs nach außen befördert wird und die Reibung vermindert. Dadurch, daß sich die einzelnen Rollen 1 nur an einer sehr kleinen Kontaktstelle berühren, werden annähernd die gleichen Vorteile erzielt wie bei Verwendung eines Käfigs, wobei ein zusätzlicher Vorteil darin besteht, daß aufgrund des sehr geringen Abstandes zwischen den einzelnen Rollen 1 mehr tragende Rollen 1 untergebracht werden können.

Der Aufbau des in der Figur 7 gezeigten Linearlagers entspricht in den Grundzügen der aus der DE-A-3 620 571 bekannten Rollenausführung. Die Figur 7 zeigt daher nur die erfindungsgemäßen Neuerungen. Diese sind prinzipiell auch auf andere Ausführungen anwendbar.

In Figur 7 ist als ein erstes Schiebeteil ein Lagerkörper 15 gezeigt, der auf einer Schiene 16 als einem zweiten Schiebeteil in deren Längsrichtung verschiebbar geführt ist. Die Schiene 16 wird über mittige Bohrungen 17 mit dem Untergrund verschraubt. Die Schiene 16 besitzt eine auf dem Untergrund anliegende Fußfläche 16a, eine dieser gegenüberliegende Kopffläche 16b sowie zwei die Flächen 16a,16b verbindende Seitenflächen 16c,16d.

Orthogonal zur Fußfläche 16a, in der Mitte der beiden Seitenflächen 16c,16d, steht in Lagerlängsrichtung eine Symmetrieebene S für das Linearlager. Die Befestigung des Lagerkörpers 15 an einem nicht gezeigten Anschlußteil, beispielsweise einem Werkzeugmaschinenschlitten, erfolgt durch Bolzenverbindungen mit Befestigungsbohrungen 18. Wie aus dieser Figur hervorgeht, besitzt der Lagerkörper 15 zwei Rollenumläufe A,C;B,D aufnehmende Schenkelbereiche 15a bzw.15b und einen diese Schenkelbereiche 15a,15b verbindenden Stegbereich 15c.

Die die vier Rollenumläufe A,B,C,D aufnehmenden Schenkelbereiche 15a, 15b sind dabei so mit dem Stegbereich 15c verbunden, daß der Lagerkörper 15 die Schiene 16 U-förmig umgreift. Die vier Rollenumläufe A,B,C,D zeigen jeweils eine in Schienenlängsrichtung verlaufende lastübertragende Rollenreihe A1,B1,C1,D1; diese Rollenreihen laufen auf vier zur Symmetrieebene (S) hin konvergierenden Flächen 16f je einer Trapeznut 16e in den beiden Seitenflächen 16c,16d der Schiene 16; die Flächen bilden lastaufnehmenden Rollenlaufbahnen A12,B12,C12,D12; ferner weist jeder Rollenumlauf jeweils eine rücklaufende Rollenreihe A2,B2,C2,D2 auf, die in Rücklaufkanälen A21,B21,C21,D21 innerhalb des Lagerkörpers 15 geführt sind. Die lastübertragenden Rollenreihen A1,B1,C1,D1 und die rücklaufenden Rollenreihen A2,B2,C2,D2 sind durch nicht weiter dargestellte Bogenrollenreihen miteinander verbunden. Durch die hierdurch entstehenden Endlosrollenumläufe A,B,C,D wird die Längsbewegung der gegeneinander verschiebbaren Teile 15,16 ermöglicht, die beispielsweise mit einem Werkzeugmaschinenschlitten bzw. einem Werkzeugmaschinenbett verbindbar sind. Die lastübertragenden Rollenreihen A1,B1, C1,D1 sind außerdem auf lastaufnehmenden Rollenlaufbahnen A13,B13,C13,D13 des Lagerkörpers 15 und an Haltestegen 26 geführt. Die lastaufnehmenden Rollenlaufbahnen A13,B13,C13,D13 sind in den Seitenflächen 16c,d der Schiene 16 gegenüberstehenden Innenflächen 15d,15e der Schenkelbereiche 15a,15b des Lagerkörpers 15 eingearbeitet und im wesentlichen parallel zu den lastaufnehmenden Rollenlaufbahnen A12,B12,C12,D12 der Führungsschiene 16 angeordnet. Jeder Haltesteg 26 wird über eine Feder 26a, die in eine entsprechende Nut 26b im Lagerkörper 15 eingreift, auf seiner ganzen Länge gesichert und hängt mit nicht gezeigten Endplatten zusammen, in denen die nicht gezeigten Bogenrollenreihen geführt sind. Die Rollen 1 jeder lastübertragenden Rollenreihe A1,B1,C1,D1 sind jeweils zwischen einer Stützfläche 27 eines der Schenkelbereiche 15a,15b des Lagerkörpers 15 und je einer weiteren Stützfläche 27 eines der Haltestege 26 geführt. Die in die Schiene 16 eingearbeiteten lastaufnehmenden Rollenlaufbahnen A12,B12,C12,D12 sind jeweils mit Ausklinkungen 19 und die in den Lagerkörper 15 eingearbeiteten lastaufnehmenden Rollenlaufbahnen A13,B13,C13,D13 jeweils mit Ausklinkungen 20 zur Aufnahme der distanzhaltenden Umfangsflächen 2 der Rollen 1 versehen, so daß die distanzhaltenden Umfangsflächen 2 keine Last übertragen. In den Rücklaufkanälen A21,B21,C21, D21 liegen die Rollen 1 mit den distanzhaltenden Umfangsflächen 2 an Begrenzungsflächen 28 der Rücklaufkanäle an, wobei die lastaufnehmenden Umfangsflächen 3 außer Berührung mit den Begrenzungsflächen 28 sind. Durch Verwendung von Laufrollen 1, die an ihren axialen Stirnseiten zentrale Vorsprünge 35 besitzen, wird die Reibung an den axialen Stützflächen 27 für die Rollen 1 zusätzlich reduziert. Eine Verbesserung des Reibverhaltens wird auch durch die Verwendung von Rollen 1 mit Schmiermitteltaschen (Ausnehmungen 10,14) erzielt. Das vorteilhafte Ablaufverhalten eines solchen Lagers wurde bereits in den Figuren 5a,5b beschrieben.

## Patentansprüche

1. Rollenlageranordnung mit relativ zueinander durch mindestens eine Gruppe von Rollen (1) geführten Lagerteilen (12,13;15,16; 42,43), wobei eine Rolle (1) eine Rollenachse und eine lastaufnehmende Umfangsfläche (3) um die Rollenachse aufweist, wobei weiter die lastaufnehmenden Umfangsflächen (3) der Rollen (1) an je einer zu den Rollenachsen im wesentlichen orthogonal verlaufenden, lastaufnehmende Rollenlaufbahn (12a, 13a;A12,B12, C12,D12,A13,B13,C13,D13;42a,43a) der beiden Lagerteile (12,13;15,16;42,43) anliegen und wobei Distanzmittel (2) vorgesehen sind, um die gegenseitige Berührung der lastaufnehmenden Umfangsflächen (3) einander benachbarter Rollen (1) zu verhindern, und wobei
die lastaufnehmende Umfangsfläche (3) einer Rolle (1) in Achsrichtung der Rolle zwischen zwei distanzhaltenden Umfangsflächen (2) der Rolle (1) angeordnet ist, welche in radialer Richtung über die lastaufnehmende Umfangsfläche (3) vorspringen und axial außerhalb der lastaufnehmenden Rollenlaufbahnen (12a,13a;A12,B12,C12,D12,A13,B13,C13,D13;42a,43a) liegen,
**dadurch gekennzeichnet,**
daß der Gleitreibwert zwischen distanzhaltenden Umfangsflächen (2) benachbarter Rollen (1) geringer ist als der theoretische Gleitreibwert zwischen zwei lastaufnehmenden Umfangsflächen (3).

2. Rollenlageranordnung nach Anspruch 1,
**dadurch gekennzeichnet,**
daß die axiale Breite einer distanzhaltenden Unfangsfläche (2) wesentlich geringer ist als die axiale Breite der lastaufnehmenden Umfangsfläche (3).

3. Rollenlageranordnung nach Anspruch 2,
**dadurch gekennzeichnet,**
daß die axiale Breite einer distanzhaltenden Umfangsfläche (2) weniger als 40 %, vorzugsweise weniger als 20 %, der axialen Breite der lastaufnehmenden Umfangsfläche (3) ist.

4. Rollenlageranordnung nach einem der Ansprüche 1 bis 3,
**dadurch gekennzeichnet,**
daß der radiale Vorsprung der distanzhaltenden Umfangsflächen (2) weniger als 30 %, vorzugsweise weniger als 10 %, des Radius der lastaufnehmenden Umfangsfläche (3) beträgt.

5. Rollenlageranordnung nach einem der Ansprüche 1 bis 4,
**dadurch gekennzeichnet,**
daß wenigstens eine im wesentlichen achsnormale Stirnfläche einer Rolle (1) wenigstens teilweise mit einer gleitgünstigen Schicht beschichtet ist und mit dieser an einer ihr gegenüber liegenden Stützfläche (27;30;40) gleitend anliegt.

6. Rollenlageranordnung nach Anspruch 5,
**dadurch gekennzeichnet,**
daß die gleitgünstige Schicht einer Rollenstirnfläche zusammenhängend mit dem Material einer distanzhaltenden Umfangsfläche (2) ausgebildet ist.

7. Rollenlageranordnung nach einem der Ansprüche 1 bis 6,
**dadurch gekennzeichnet,**
daß eine distanzhaltende Umfangsfläche (2) durch eine an dem Material der Rolle (1) anhaftende Schicht gebildet ist.

8. Rollenlageranordnung nach einem der Ansprüche 1 bis 7,
**dadurch gekennzeichnet,**
daß eine distanzhaltende Umfangsfläche (2) von einem Mantel einer topfförmigen Kappe (5) gebildet ist.

9. Rollenlageranordnung nach Anspruch 8,
**dadurch gekennzeichnet,**
daß die topfförmige Kappe (5) auf ein Halteprofil (4) der Rolle (1) aufgeschnappt ist.

10. Rollenlageranordnung nach einem der Ansprüche 1 bis 6,
**dadurch gekennzeichnet,**
daß die distanzhaltende Umfangsfläche (2) von der Umfangsfläche einer an einer Rollenstirnfläche befestigten Scheibe gebildet ist.

11. Rollenlageranordnung nach einem der Ansprüche 1 bis 10,
**dadurch gekennzeichnet,**
daß in mindestens einer Rollenstirnfläche wenigstens eine Ausnehmung (10,14) zur Aufnahme von Schmiermittel vorgesehen ist.

12. Rollenlageranordnung nach einem der Ansprüche 1 bis 11,
**dadurch gekennzeichnet,**
daß an mindestens einer Rollenstirnfläche ein zentraler Vorsprung (35) zur gleitenden Anlage an einer Stützfläche (27;30;40) vorgesehen ist.

13. Rollenlageranordnung nach einem der Ansprüche 1 bis 12,
**dadurch gekennzeichnet,**
daß an mindestens einer Rollenstirnfläche ein ringförmiger Vorsprung zur gleitenden Anlage an einer Stützfläche (27,30, 40) vorgesehen ist.

14. Rollenlageranordnung nach einem der Ansprüche 1 bis 13,
**dadurch gekennzeichnet,**
daß die distanzhaltende Umfangsfläche (2) in einer achsenthaltenden Schnittebene betrachtet ballig ausgebildet ist.

15. Rollenlageranordnung nach einem der Ansprüche 1 bis 14,
**dadurch gekennzeichnet,**
daß die Lagerteile (12,13) von relativ zueinander drehbaren Ringteilen (12,13) gebildet sind.

16. Rollenlageranordnung nach einem der Ansprüche 1 bis 15,
**dadurch gekennzeichnet,**
daß die Lagerteile (15,16) von relativ zueinander längs einer Verschiebeachse linear beweglichen Schiebeteilen (15,16) gebildet sind.

17. Rollenlageranordnung nach Anspruch 16,
**dadurch gekennzeichnet,**
daß an einem ersten (15) der Schiebeteile (15,16) mindestens ein geschlossener Rollenumlauf (A,B,C,D) mit einer zur Verschiebeachse parallelen lastübertragenden Rollenreihe (A1, B1,C1,D1) und mit einer rücklaufenden Rollenreihe (A2,B2,C2, D2) angeordnet ist, wobei die Rollen (1) der lastübertragenden Rollenreihe (A1,B1,C1,D1) zwischen je einer lastaufnehmenden Rollenlaufbahn (A13,B13,C13,D13) des ersten Schiebeteils (15) und einer lastaufnehmenden Rollenlaufbahn (A12,B12,C12,D12) eines zweiten (16) der Schiebeteile (15,16) angeordnet sind, und wobei die rücklaufende Rollenreihe (A2,B2,C2,D2) in einer Rücklaufführung (A21,B21,C21,D21) an dem ersten Schiebeteil (15) geführt ist.

18. Rollenlageranordnung nach Anspruch 17,
**dadurch gekennzeichnet,**
daß die Rollen (1) der lastübertragenden Rollenreihe (A1,B1, C1,D1) mit ihren Stirnflächen an Stützflächen (27) mindestens eines der Schiebeteile (15,16) anliegen.

19. Rollenlageranordnung nach Anspruch 17 oder 18,
**dadurch gekennzeichnet,**
daß die Rücklaufführung (A21,B21,C21,D21) von einem Führungskanal (A21,B21,C21,D21) an dem ersten Schiebeteil (15) gebildet ist, wobei die Rollen (1) mit den distanzhaltenden Umfangsflächen (2) an Begrenzungsflächen (28) dieses Führungskanals (A21,B21,C21,D21) anliegen und die lastaufnehmenden Umfangsflächen (3) außer Berührung mit den Begrenzungsflächen (28) sind.

20. Rollenlageranordnung nach einem der Ansprüche 17 bis 19,
**dadurch gekennzeichnet,**
daß die Rollen (1) der rücklaufenden Rollenreihe (A2,B2,C2, D2) mit ihren Stirnflächen an Stützflächen (27) der Rücklaufführung (A21,B21,C21,D21) anliegen.

21. Rollenlageranordnung nach einem der Ansprüche 17 bis 20,
**dadurch gekennzeichnet,**
daß das zweite Schiebeteil (16) von einer Führungsschiene (16) mit einer Fußfläche (16a), einer Kopffläche (16b), zwei Seitenflächen (16c,16d) und einer Symmetrieebene (S) zwischen den beiden Seitenflächen (16c,16d) gebildet ist, daß in den beiden Seitenflächen (16c,16d) je eine Trapeznut (16e) eingearbeitet ist, daß zur Symmetrieebene (S) hin konvergierende Flächen (16f) der Trapeznut (16e) die lastaufnehmenden Rollenlaufbahnen (A12,B12,C12,D12) von insgesamt vier Rollenumläufen (A,B,C,D) bilden und daß das erste Schiebeteil (15) von einem die Führungsschiene (16) umfassenden U-förmigen Lagerkörper (15) mit einem Stegbereich (15c) und zwei Schenkelbereichen (15a,15b) gebildet ist, wobei an den Seitenflächen (16c,16d) der Führungsschiene (16) gegenüberstehenden Innenflächen (15d,15e) der Schenkelbereiche (15a,15b) die lastaufnehmenden Rollenlaufbahnen (A13,B13,C13,D13) des Lagerkörpers (15) im wesentlichen parallel zu den lastaufnehmenden Rollenlaufbahnen (A12,B12,C12,D12) der Führungsschiene (16) angeordnet sind.

22. Rollenlageranordnung nach Anspruch 21,
**dadurch gekennzeichnet,**
daß die Trapeznuten (16e) für jede lastaufnehmende Rollenlaufbahn (A12,B12,C12,D12) der Führungsschiene (16) mindestens eine Ausklinkung (19) zur Aufnahme der distanzhaltenden Umfangsflächen (2) der Rollen (1) aufweisen und daß an den Innenflächen (15d,15e) der Schenkelbereiche (15a,15b) des Lagerkörpers (15) für die Rollen (1) jeder lastübertragenden Rollenreihe (A1,B1,C1,D1) mindestens eine Ausklinkung (20) für die distanzhaltenden Umfangsflächen (2) der Rollen (1) vorgesehen ist.

23. Rollenlageranordnung nach Anspruch 21 oder 22,
**dadurch gekennzeichnet,**
daß jeweils eine Stützfläche (27) für eine lastübertragende Rollenreihe (A1,B1,C1,D1) an einem zugehörigen Schenkelbereich (15a,15b) des Lagerkörpers (15) und eine weitere Stützfläche (27) an einem an dem zugehörigen Schenkelbereich (15a, 15b) anliegenden Haltestück (26) vorgesehen ist.

24. Rollenlageranordnung nach Anspruch 23,
**dadurch gekennzeichnet,**
daß ein und derselbe Haltesteg (26) jeweils eine Stützfläche (27) für die beiden einem Schenkelbereich (15a;15b) zugeordneten lastübertragenden Rollenreihen (A1,C1;B1,D1) aufweist.

## Claims

1. A roller bearing arrangement, comprising bearing members (12, 13; 15, 16; 42, 43) guided in relation to each other by at least one group of rollers (1), a roller (1) having a roller axis and a load-bearing circumferential surface (3) around the roller axis, the load-bearing circumferential surfaces (3) of the rollers (1) bearing on a respective load-bearing roll race (12a, 13a; A12, B12, C12, D12, A13, B13, C13, D13; 42a, 43a) of the two bearing members (12, 13; 15, 16; 42, 43) extending substantially orthogonally to the roller axes, and spacer means (2) being provided to prevent mutual contact between the load-bearing circumferential surfaces (3) of adjacent rollers (1), and the load-bearing circumferential surface (3) of a roller (1) being disposed in the axial direction of the roller between two space-maintaining circumferential surfaces (2) of the roller (1) which project in a radial direction beyond the load-bearing circumferential surface (3) and which are situated axially outside the load-bearing roll races (12a,13a; A12, B12, C12, D12, A13, B13, C13, D13; 42a, 43a),
**characterised in that**
the sliding friction coefficient between the space-maintaining circumferential surfaces (2) of adjacent rollers (1) is less than the theoretical sliding friction coefficient between two load-bearing circumferential surfaces (3).

2. A roller bearing arrangement according to claim 1,
characterised in that
the axial width of a space-maintaining circumferential surface (2) is substantially less than the axial width of the load-bearing circumferential surface (3).

3. A roller bearing arrangement according to claim 2,
characterised in that
the axial width of a space-maintaining circumferential surface (2) is less than 40% and preferably less than 20% of the axial width of the load-bearing circumferential surface (3).

4. A roller bearing arrangement according to one of claims 1 to 3,
characterised in that
the radial projection of the space-maintaining circumferential surfaces (2) amounts to less than 30% and preferably less than 10% of the radius of the load-bearing circumferential surface (3).

5. A roller bearing arrangement according to one of claims 1 to 4,
characterised in that
at least one substantially axially orthogonal end face of a roller (1) is at least partially coated with a slip-encouraging coating by which it slidingly bears on an opposing supporting surface (27; 30; 40)

6. A roller bearing arrangement according to claim 5,
characterised in that
the slip-encouraging coating on a roller end face is coherent with the material of a space-maintaining circumferential surface (2).

7. A roller bearing arrangement according to one of claims 1 to 6,
characterised in that
a space-maintaining circumferential surface (2) is formed by a coating adhering to the material of the roller (1).

8. A roller bearing arrangement according to one of claims 1 to 7,
characterised in that
a space-maintaining circumferential surface (2) is formed by a skirt of a pot-shaped cap (5).

9. A roller bearing arrangement according to claim 8,
characterised in that
the pot-shaped cap (5) is snap-fitted onto a retaining profile (4) on the roller (1).

10. A roller bearing arrangement according to one of claims 1 to 6,
characterised in that
the space-maintaining circumferential surface (2) is formed by the circumferential surface of a disk attached to a roller end face.

11. A roller bearing arrangement according to one of claims 1 to 10,
characterised in that
at least one roller end face is provided with at least one recess (10, 14) for accommodating lubricants.

12. A roller bearing arrangement according to one of claims 1 to 11,
characterised in that
on at least one roller end face there is provided a central projection (35) to slidingly bear on a supporting surface (27; 30; 40).

13. A roller bearing arrangement according to one of claims 1 to 12,
characterised in that
on at least one roller end face there is provided an annular projection to slidingly bear on a supporting surface (27, 30, 40).

14. A roller bearing arrangement according to one of claims 1 to 13,
characterised in that
the space-maintaining circumferential surface (2), viewed in a sectional plane that contains the roller axis, is formed crownedly.

15. A roller hearing arrangement according to one of claims 1 to 14,
characterised in that
the bearing members (12, 13) are formed by annular members (12, 13) adapted to rotate relative to one another.

16. A roller bearing arrangement according to one of claims 1 to 15,
characterised in that
the bearing members (15, 16) are formed by sliding members (15, 16) adapted for linear movement relative to one another and along a sliding axis.

17. A roller bearing arrangement according to claim 16,
characterised in that
at least one closed loop of rollers (A, B, C, D) is disposed on a first one (15) of the sliding members (15, 16) and has a load-transmitting row of rollers (A1, B1, C1, D1) parallel with the sliding axis and a reverse-running row of rollers (A2, B2, C2, D2), the rollers (1) of the load-transmitting row of rollers (A1, B1, C1, D1) being disposed each between a load-bearing roll race (A13, B13, C13, D13) of the first sliding member (15) and a load-bearing roll race (A12, B12, C12, D12) of a second one (16) of the sliding members (15, 16), the reverse-running row of rollers (A2, B2, C2, D2) being guided in a return guide (A21, B21, C21, D21) on the first sliding member (15).

18. A roller bearing arrangement according to claim 17,
characterised in that
the rollers (1) of the load-transmitting row of rollers (A1, B1, C1, D1) have their end faces bearing on supporting surfaces (27) of at least one of the sliding members (15, 16).

19. A roller bearing arrangement according to claim 17 or 18,
characterised in that
the return guide (A21, B21, C21, D21) is formed by a guide channel (A21, B21, C21, D21) on the first sliding member (15), the rollers (1) having their space-maintaining circumferential surfaces (2) bearing on peripheral surfaces (28) of the guide channel (A21, B21, C21, D21), and the load-bearing circumferential surfaces (3) being out of contact with the peripheral surfaces (28).

20. A roller bearing arrangement according to one of claims 17 to 19,
characterised in that
the rollers (1) of the reverse-running row of rollers (A2, B2, C2, D2) have their end faces bearing on supporting surfaces (27) on the return guide (A21, B21, C21, D21).

21. A roller bearing arrangement according to one of claims 17 to 20,
characterised in that
the second sliding member (16) is formed by a guide rail (16) having a bottom surface (16a), a top surface (16b), two lateral surfaces (16c, 16d) and a plane of symmetry (S) between the two lateral surfaces (16c, 16d), and in that one trapezoidal groove (16e) is worked into each of the two lateral surfaces (16c, 16d), and in that such surfaces (16f) of the trapezoidal groove (16e) which converge towards the plane of symmetry (S) form the load-bearing roll races (A12, B12, C12, D12) of altogether four loops of rollers (A, B, C, D), and in that the first sliding member (15) is formed by a U-shaped bearing member (15) encompassing the guide rail (16) and having a web portion (15c) and two flange portions (15a, 15b), wherein the load-bearing roll races (A13, B13, C13, D13) of the bearing member (15) are disposed on inner surfaces (15d, 15e) of the flange portions (15a, 15b) which face the lateral surfaces (16c, 16d) of the guide rail (16), substantially parallel with the load-bearing roll races (A12, B12, C12, D12) of the guide rail (16).

22. A roller bearing arrangement according to claim 21,
characterised in that
for each load-bearing roll race (A12, B12, C12, D12) of the guide rail (16) the trapezoidal grooves (16e) have at least one notch (19) for accommodating the space-maintaining circumferential surfaces (2) of the rollers (1), and in that for the rollers (1) of each load-transmitting row of rollers (A1, B1, C1, D1) there is provided at least one notch (20) for the space-maintaining circumferential surfaces (2) of the rollers (1) on the inner surfaces (15d, 15e) of the flange portions (15a, 15b) of the bearing member (15).

23. A roller bearing arrangement according to claim 21 or 22,
characterised in that
for a load-transmitting row of rollers (A1, B1, C1, D1) a supporting surface (27) is provided on an associated flange portion (15a, 15b) of the bearing member (15), and a further supporting surface (27) is provided on a retaining member (26) bearing on the associated flange portion (15a, 15b).

24. A roller bearing arrangement according to claim 23,
characterised in that
one and the same retaining web (26) has respective supporting surfaces (27) for the two load-transmitting rows of rollers (A1, C1; B1, D1) that are associated with one flange portion (15a; 15b).

## Revendications

1. Palier à rouleaux comportant des pièces formant palier (12, 13 ; 15, 16 ; 42, 43), guidées l'une par rapport à l'autre par au moins un groupe de rouleaux (1), un rouleau (1) présentant un axe et une surface périphérique (3), autour de l'axe du rouleau, absorbant les charges, les surfaces périphériques (3) des rouleaux absorbant les charges (1) s'appliquant en outre chacune contre une trajectoire de rouleaux (12a, 13a ; A12, B12, C12, D12, A13, B13, C13, D13 ; 42a, 43a) absorbant les charges, s'étendant sensiblement orthogonalement aux axes des rouleaux, des deux pièces formant palier (12, 13 ; 15, 16 ; 42, 43) et des moyens d'écartement (2) étant prévus, afin d'empêcher le contact réciproque des surfaces périphériques (3) absorbant les charges l'une contre l'autre de rouleaux (1) voisins, et dans lequel la surface périphérique (3) absorbant les charges d'un rouleau (1) est située dans la direction axiale du rouleau, entre deux surfaces périphériques (2) du rouleau (1) maintenant l'écartement lesquelles font saillie radialement de la surface périphérique (3) absorbant les charges et se situent axialement à l'extérieur des trajectoires de rouleaux (12a, 13a ; A12, B12, C12, D12, A13, B13, C13, D13 ; 42a, 43a) absorbant les charges,
caractérisé
en ce que le coefficient de glissement entre des surfaces périphériques (2) maintenant l'écartement de rouleaux (1) voisins est inférieur au coefficient de glissement théorique entre deux surfaces périphériques (3) absorbant les charges.

2. Palier à rouleaux selon la revendication 1,
caractérisé
en ce que la largeur axiale de la surface périphérique (2) maintenant l'écartement est sensiblement inférieure à la largeur axiale de la surface périphérique (3) absorbant les charges.

3. Palier à rouleaux selon la revendication 2,
caractérisé
en ce que la largeur axiale d'une surface périphérique (2) maintenant l'écartement est inférieure à 40 %, de préférence inférieure à 20 %, de la largeur axiale de la surface périphérique (3) absorbant les charges.

4. Palier à rouleaux selon l'une des revendications 1 à 3,
caractérisé
en ce que la saillie radiale des surfaces périphériques (2) maintenant l'écartement est inférieure à 30 %, de préférence inférieure à 10 %, du rayon de la surface périphérique (3) absorbant les charges.

5. Palier à rouleaux selon l'une des revendications 1 à 4,
caractérisé
en ce qu'au moins une face frontale d'un rouleau (1) sensiblement normale à l'axe est revêtue au moins partiellement d'une couche favorisant le glissement et s'applique en glissant, par celle-ci, contre une surface d'appui (27 ; 30 40) lui faisant face.

6. Palier à rouleaux selon la revendication 5,
caractérisé,
en ce que la couche favorisant le glissement d'une face frontale de rouleau est réalisée d'un seul tenant avec la matière d'une surface périphérique (2) maintenant l'écartement.

7. Palier à rouleaux selon l'une des revendications 1 à 6,
caractérisé
en ce qu'une surface périphérique (2) maintenant l'écartement est formée par une couche adhérant à la matière du rouleau (1).

8. Palier à rouleaux selon l'une des revendications 1 à 7,
caractérisé
en ce qu'une surface périphérique (2) maintenant l'écartement est formée par une enveloppe d'un capuchon (5) en forme de pot.

9. Palier à rouleaux selon la revendication 8,
caractérisé
en ce que le capuchon (5) en forme de pot est clipsé sur un profilé de maintien (4) du rouleau (1).

10. Palier à rouleaux selon l'une des revendications 1 à 6,
caractérisé
en ce que la surface périphérique (2) maintenant l'écartement est formée par la surface périphérique d'un disque fixé sur une face frontale du rouleau.

11. Palier à rouleaux selon l'une des revendications 1 à 10,
caractérisé
en ce que dans au moins une face frontale de rouleau il est prévu au moins un évidement (10, 14) destiné à recevoir du lubrifiant.

12. Palier à rouleaux selon l'une des revendications 1 à 11,
caractérisé
en ce que sur au moins une face frontale de rouleau il est prévu une saillie centrale (35) pour l'application en glissement sur une surface d'appui (27 ; 30 ; 40).

13. Palier à rouleaux selon l'une des revendications 1 à 12,
caractérisé
en ce que sur au moins une face frontale de rouleau il est prévu une saillie annulaire pour l'application en glissement sur une surface d'appui (27, 30, 40).

14. Palier à rouleaux selon l'une des revendications 1 à 13,
caractérisé
en ce que la surface périphérique (2) maintenant l'écartement, considérée dans un plan de coupe contenant l'axe, est bombée.

15. Palier à rouleaux selon l'une des revendications 1 à 14,
caractérisé
en ce que les pièces formant palier (12, 13) sont formées par des pièces annulaires (12, 13) tournant l'une par rapport à l'autre;

16. Palier à rouleaux selon l'une des revendications 1 à 15,
caractérisé
en ce que les pièces formant palier (15, 16) sont formées par des pièces coulissantes (15, 16), se déplaçant linéairement l'une par rapport à l'autre, le long d'un axe de coulissement.

17. Palier à rouleaux selon la revendication 16,
caractérisé
en ce que sur une première (15) des pièces coulissantes (15, 16) il est prévu au moins un circuit de rouleaux (A, B, C, D) fermé avec une rangée de rouleaux (A1, B1, C1, D1) transmettant les charges, parallèle à l'axe de coulissement et avec une rangée de rouleaux (A2, B2, C2, D2) de retour, les rouleaux (1) de la rangée (A1, B1, C1, D1) transmettant les charges étant placés chacun entre une trajectoire (A13, B13, C12, D13) absorbant les charges de la première pièce coulissante (15) et une trajectoire (A12, B12, C12, D12) absorbant les charges d'une seconde (16) des pièces coulissantes (15, 16), et la rangée de rouleaux (A2, B2, C2, D2) de retour étant guidée dans un guidage de retour (A21, B21, C21, D21) sur la première pièce coulissante (15).

18. Palier à rouleaux selon la revendication 17,
caractérisé
en ce que les rouleaux (1) de la rangée de rouleaux (A1, B1, C1, D1) transmettant les charges s'appliquent par leurs faces frontales contre des surfaces d'appui (27) d'au moins l'une des pièces coulissantes (15, 16).

19. Palier à rouleaux selon la revendication 17 ou 18,
caractérisé
en ce que le guidage de retour (A21, B21, C21, D21) est formé par un canal de guidage (A21, B21, C21, D21) sur la première pièce coulissante (15), les rouleaux (1) s'appliquant par les surfaces périphériques (2) maintenant l'écartement contre des surfaces de délimitation (28) de ce canal de guidage (A21, B21, C21, D21) et les surfaces périphériques (3) absorbant les charges n'étant pas en contact avec les surfaces de délimitation (28).

20. Palier à rouleaux selon l'une des revendications 17 à 19,
caractérisé
en ce que les rouleaux (1) de la rangée de rouleaux (A2, B2, C2, D2) de retour s'appliquent par leurs faces frontales contre des surfaces d'appui (27) du guidage de retour (A21, B21, C21, D21).

21. Palier à rouleaux selon l'une des revendications 17 à 20,
caractérisé
en ce que la seconde pièce coulissante (16) est formée par un rail de guidage (16) avec une surface de pied (16a), une surface de tête (16b), deux surfaces latérales (16c, 16d) et un plan de symétrie (S) entre les deux faces latérales (16c, 16d), en ce que dans chacune des deux faces latérales (16c, 16d) est pratiquée une rainure trapézoïdale (16e), en ce que des surfaces (16f) de la rainure trapézoïdale (16e) convergeant vers le plan de symétrie (S) forment les trajectoires de rouleaux (A12, B12, C12, D12) absorbant les charges d'au total quatre circuits de rouleaux (A, B, C, D) et en ce que la première pièce coulissante (15) est formée par un corps de palier (15) en U, entourant le rail de guidage (16), avec une zone de base (15c) et deux zones de branche (15a, 15b), les trajectoires (A13, B13, C13, D13) absorbant les charges du corps de palier (15) étant prévues sur des surfaces intérieures (15d, 15e) des zones de branche (15a, 15b), faisant face aux surfaces latérales (16c, 16d) du rail de guidage (16), sensiblement parallèlement aux trajectoires (A12, B12, C12, D12) absorbant les charges du rail de guidage (16).

22. Palier à rouleaux selon la revendication 21,
caractérisé
en ce que les rainures trapézoïdale (16e) pour chaque trajectoire (A12, B12, C12, D12) absorbant les charges du rail de guidage (16) comportent au moins une encoche (19) destinée à recevoir les surfaces périphériques (2) maintenant l'écartement des rouleaux (1) et en ce que sur les surfaces intérieures (15d, 15e) des zones de branche (15a, 15b) du corps de palier (15) il est prévu, pour les rouleaux (1) de chaque rangée (A1, B1, C1, D1) transmettant les charges, au moins une encoche (20) pour les surfaces périphériques (2) maintenant l'écartement des rouleaux (1).

23. Palier à rouleaux selon la revendication 21 ou 22,
caractérisé
en ce qu'il est prévu une surface d'appui (27) pour une rangée de rouleaux (A1, B1, C1, D1) transmettant les charges sur une zone de branche (15a, 15b) correspondante du corps de palier (15) et une autre surface d'appui (27) sur une pièce de maintien (26), s'appliquant contre la zone de branche (15a, 15b) correspondante.

24. Palier à rouleaux selon la revendication 23,
caractérisé
en ce qu'une seule et même pièce de maintien (26) présente une surface d'appui (27) pour les deux rangées de rouleaux (A1, C1 ; B1, D1) transmettant les charges, associée à une zone de branche (15a ; 15b).
